**Europäisches Patentamt**

**European Patent Office**

**Office européen des brevets**

(19)

(11) Veröffentlichungsnummer: **0 030 026**
**B2**

(12) # NEUE EUROPÄISCHE PATENTSCHRIFT

(45) Veröffentlichungstag der neuen Patentschrift:
25.01.89

(51) Int. Cl.⁴: **H 02 M 3/335,** H 02 J 7/10

(21) Anmeldenummer: 80107474.1

(22) Anmeldetag: 29.11.80

(54) Schaltungsanordnung zur geregelten Speisung eines Verbrauchers.

(30) Priorität: 29.11.79 DE 2948054
30.10.80 DE 3040875

(43) Veröffentlichungstag der Anmeldung:
10.06.81 Patentblatt 81/23

(45) Bekanntmachung des Hinweises auf die Patenterteilung:
26.10.83 Patentblatt 83/43

(45) Bekanntmachung des Hinweises auf die Entscheidung über den Einspruch:
25.01.89 Patentblatt 89/4

(84) Benannte Vertragsstaaten:
AT CH FR GB IT LI NL

(56) Entgegenhaltungen:
EP-A-0 030 276
DE-A-2 014 377
DE-A-2 457 664
DE-A-2 713 347
GB-A-848 377
US-A-3 435 320
US-A-4 084 219

ELECTRONICS, Band 51, Nr. 26, 21. Dezember 1978, New York, US, R.J. BOSCHERT: "Flyback converters: Solid-state solution to low-cost switching power supplies" Seiten 100-104
ELECTRICAL DESIGN NEWS, Band 15, Nr. 2, 15. Januar 1970, Denver, US, D.A. ZINDER: "Fast-charging systems for Ni-Cd batteries", Seiten 65-67
"Applikationsbuch Band 2", Verlag Texas Instruments Deutschland GmbH,1978 S. 125-135

(73) Patentinhaber: **Becker, Klaus, Bamberger Strasse 32, D-8602 Mühlhausen (DE)**

(72) Erfinder: **Becker, Klaus, Bamberger Strasse 32, D-8602 Mühlhausen (DE)**

(74) Vertreter: **Blumbach Weser Bergen Kramer Zwirner Hoffmann Patentanwälte, Sonnenbergerstrasse 43, D-6200 Wiesbaden 1 (DE)**

(56) Entgegenhaltungen: (Fortsetzung)
**"VALVO Technische Informationen für die Industrie, Nr. 770415"** (Steuer- und Regelschaltungen TDA1060 für Schaltnetzteile), April 1977
**"VALVO- Technische Informationen für die Industrie: Schaltnetzteile mit Transistoren der Reihe B, U, X 90, Nr. 761027, Oktober 1976**

EP 0 030 026 B2

**Beschreibung**

Die Erfindung betrifft eine Schaltungsanordnung zur geregelten Speisung eines Verbrauchers nach dem Oberbegriff des Anspruchs 1.

Für viele elektrische Verbraucher, beispielsweise transportabe Geräte und hier wiederum elektrische Trockenrasierer, elektronische Blitzgeräte, Leuchtstofflampen o. dgl., ist eine Stromversorgungsschaltung erwünscht, die ohne Umschaltung an praktisch allen Gleich- und Wechselstromnetzen der Welt betrieben werden kann und den Verbraucher in der gewünschten Weise speist, beispielsweise mit konstantem Strom oder konstanter Spannung oder auch einer Kombination von beiden. Wenn der Verbraucher einen Akkumulator enthält, um beispielsweise bei einem Trockenrasierer auch unabhängig vom Netz einen Betrieb zu ermöglichen, so soll die Stromversorgungsschaltung wiederum unabhängig von der Netzspannung und -frequenz den Akkumulator aufladen, oder auch den Verbraucher allein speisen konnen, beispielsweise dann, wenn der Akkumulator entladen ist,

Bei den beschriebenen Anwendungsfällen einer solchen Schaltungsanordnung kommt als erschwerende Bedingung hinzu, daß wegen der beengten Platzverhältnisse, beispielsweise in einem Trockenrasierer, der Raumbedarf für die Speiseschaltungsanordnung nur sehr klein sein darf und gleichzeitig die Verlustleistung besonders niedrig gehalten werden muß, weil bei keinem Volumen die Kühlungsmöglichketen sehr begrenzt sind. Schließlich wird bei vielen tragbaren Geräten ein einwandfreier Betrieb auch bei erhöhter Umgebungstemperatur, beispielsweise bei Reisen in tropische Länder, verlangt.

Bei bekannten Schaltungsanordnungen (US-A-4 005 351 und "Electronics". Band 51. Nr 26 vom 21.12.78, S. 100 bis 104) hat die Eingangsspannung einen starken Einfluß auf die Betriebsweise, weil die Anstiegsgeschwindgkeit des Primärstroms von der Eingangsspannung abhängt. Die Einschaltdauer des ersten Halbleiterschalters in Form eines Transistors wird dann bei gleichem Abschaltstrom mit steigender Eingangsspannung kleiner, und die daraus resultierende Frequenzänderung führt zu einer entsprechenden Änderung der mittleren Ausgangsleistung. Zur Konstanthaltung der Ausgangsspannung sieht die bekannte Schaltungsanordnung zwar eine Beeinflussung des Primärstrom-Abschaltwertes und damit der Einschaltzeit durch Zuführen einer weiteren Spannung vor, die während der Sperrphase gewonnen und an die Steuerelektrode des zweiten Halbleiterschalters angelegt wird. Damit wird die prinzipielle Abhängigkeit von der Eingangsspannung aber nicht aufgehoben. Da die beiden Regelgrößen, nämlich der Primärstrom und die Ausgangsspannung, zu unterschiedlichen Zeiten - während der Durchlaß- bzw. der Sperrphase - gewonnen werden, ist eine Speicherung des einen Wertes mittels eines Kondensators erforderlich. Damit sinkt die Regelgeschwindigkeit die Schaltungsanordnung kann sich also nicht sofort auf schwankende Betriebsbedingungen einstellen.

Bekannt ist auch eine weitere Schaltungsanordnung (DE-A-2 751 578) zur Bereitstellung einer geregelten Spannung unter Verwendung eines Sperrwandlers, dessen Primärwicklung über einen durch positive Rückkopplung einschaltbaren Transistor und einen Emitterwiderstand mit der Eingangsspannungsquelle verbunden ist. Wie bei der zuvor beschriebenen Schaltungsanordnung tritt auch hier eine starke Abhängigkeit von der Eingangsspannung auf, die auf der unterschiedlichen Anstiegsgeschwindigkeit des Primärstroms, abhängig von der Eingangsspannung beruht. Eine Regelung der Ausgangsspannung wird auch hier wiederum durch Gewinnung einer Spannung während der Sperrphase erreicht, so daß wiederum ein Speicherkondensator nötig ist.

Bekannt ist auch ein rückkopplungsgesteuerten Entakt-Sperrwandler (DE-A-2 543 371), bei dem der zugehörige Übertrager jeweils in die Sättigung geführt wird und dann die Abschaltung bewirkt. Der Wandler besitzt neben der Primärwicklung nur eine Sekundärwicklung die gleichzeitig zur Ableitung der Rückkopplungsspannung verwendet wird. Das gilt auch für einen bekannten Gegentakt-Gleichspannungswandler (DE-B-1 230 119), bei dem die Steuerung der Primärschalter mittels einer aus der Sekundärwicklung abgeleiteten Spannung erfolgt.

Bei einer weiteren bekannten Schaltungsanordnung (GB-A-2 000 394) zur Speisung eines Gleichstrommotors und Aufladung eines Akkumulators, die beispielsweise für einen elektrischen Rasierer verwendet wird, wird ein über einen Brückengleichrichter an die jeweilige Netzspannung angeschalteter Sperrwandler benutzt, der sekundänseitig abhängig vom Betriebszustand den Ladestrom für den Akkumulator oder auch den Betriebsstrom für den Motor liefert. Die Regelung zum Ausgleich der verschiedenen Eingangsspannungen erfolgt mittels einer komplizierten Steuerschaltung in Form einer integrierten Schaltung, die dem primärseitigen Schalttransistor des Sperrwandlers Schaitimpuise zuführt, deren Länge von der Eingangsspannung und dem jeweiligen Betriebszustand abhängt. Die bekannte Schaitungsanordnung erfüllt jedoch nicht alle Erwartungen. Ihr Aufwand ist verhältnismäßig hoch und der Platzbedarf häufig zu groß. Die integrierte Schaltung benötigt eine eigene Versorgungsspannung und demgemäß eine Startschaltung für den Sperrwandler. Außerdem verbraucht sie Leistung. Bei Netzbetrieb des Motors wird nicht die volle Ladung des Akkumulators erreicht oder gehalten.

Bekannt ist auch eine Transistor-Wandlerschaltung (DE-A-2 014 377), mit deren Hilfe aus einer Netzwechselspannung zum einen ein Ladestrom für einen Akkumulator und zum anderen ein höherer Gleichstrom für den Antrieb eines Motors erzeugt werden kann. Dazu ist ein hochfrequent betriebener Durchflußwandler mit sättigbarem Kern vorgesehen, der primärseitig an die gleichgerichtete Netzspannung angeschaltet ist und sekundärseitig die gewünschten Ströme liefert. Die bekannte Schaltung läßt sich nur an einer bestimmten Netzspannung betreiben, paßt sich also nicht automatisch an unterschiedliche Spannungen an. Da der Kern des Wandlers jeweils in die Sättigung gelangt, ist der Wirkungsgrad nur klein, und es ergeben sich thermische Probleme.

Für den Betrieb eines motorgetriebenen Elektrorasierers in einem größeren Bereich von Eingangswechselspannungen ist eine Schaltung bekannt (US-A-4 001 668), bei der ein Kondensator über Transistoren auf einen vorgegebenen Wert von etwa 100 V aufgeladen wird. Zur Abgabe höherer Ströme ist diese Schaltung nicht geeignet, weil keine Transformation stattfindet. Sie eignet sich außerdem nur für Verbraucher mit verhältnismäßig hoher Betriebsspannung. Bei kleinerer Betriebsspannung nimmt der Wirkungsgrad stark ab. Der Platzbedarf ist verhältnismäßig groß.

Schließlich ist auch noch ein Ladegerät für Akkumulatoren bekannt (US-A-3 943 423), das ohne Umschaltung für verschiedene Eingangsspannungen eingesetzt werden kann. Ein Transistorschalter liegt in einer Rückkopplungsschaltung und stellt einen veränderbaren Widerstand dar, der die Stromregelung übernimmt. Eine Transformation findet nicht statt, so daß keine höheren Ströme geliefert werden können.

Bekannt ist weiterhin eine Schaltungsanordnung nach dem Oberbegriff des Anspruchs 1 ("Applikationsbuch Band 2", Verlag Texas Instruments Deutschland GmbH, 1978, Seiten 125-135, insbesondere Abb. 19 und 20), bei der das der Eingangsspannung proportionale zweite Steuersignal einem über der Eingangsspannung liegenden Spannungsteiler mit zwei Widerständen entnommen und zusammen mit einer dem Primärstrom proportionalen Spannung der Gate-Elektrode eines Thyristors als Halbleiterelement zugeführt ist. Der über der Eingangsspannung liegende Spannungsteiler bedingt eine hohe Verlustleistung, die quadratisch mit der Eingangsspannung wächst.

Der Erfindung liegt die Aufgabe zugrunde, eine Schaltungsanordnung nach dem Oberbegriff des Anspruchs 1 zu schaffen, die ohne Umschaltung in einem sehr großen Bereich von Eingangsspannungen, beispielsweise in einem Bereich von 1 : 3, mit hohem Wirkungsgrad und hoher Regelgeschwindigkeit betrieben wrden kann, wobei der schaltungstechnische Aufwand und der Bauteil- und Platzaufwand minimal bleiben.

Ausgehend von einer Schaltungsanordnung gemäß dem Oberbegriff des Anspruchs 1 ist die Lösung der Aufgabe in dessen kannzeichnendem Teil angeben.

Durch die Gewinnung des zweiten Steuersignals aus einer Sekundärwicklung kann der erforderliche Steuerstrom einerseits wesentlich niederohmiger und damit angepaßter gewonnen werden und fließt außerdem nur während der Einschaltphase des Wandlers. Dadurch wird eine unverzögerte Regelung in einem sehr großen Eingangsspannungsbereich von beispielsweise 90 V bis 270 V bei kleinen Verlusten möglich. Eine Speicherung von Regelgrössen ist nicht erforderlich, so daß die zugehörigen Bauelemente entfallen.

Bei einem fremdgetakteten Sperrwandler zur Stromversorgung insbesondere von Fernsehgeräten, bei dem zur Bereitstellung von geregelten Gleichspannungen der Ausschaltzeitpunkt eines in die Primärwicklung geschalteten Transistors abhängig von dem fließenden Primärstrom durch einen Thyristor beeinflußt wird, ist es bereits bekannt gewesen (DE-A-2 713 347), zur Kompensation der Ladungsträgerspeicherzeit im Transistor den Abschaltzeitpunkt des Transistors dadurch zu beeinflussen, daß aus einer Sekundärwicklung über eine Zenerdiode eine Spannung gewonnen wird, die nach Überschreiten der Zenerspannung während der Leitphase des Transistors zusätzlich dem Thyristor zugeführt wird.

Wenn der Verbraucher, beispielsweise ein elektrischer Trockenrasierer, einen Akkumulator enthält, so wird zur Erzielung eines konstanten Ausgangsstroms, der den Akkumulator auflädt und/oder den Motor speist, die Ausschaltdauer des Halbleiterschalters auf einfache Weise dadurch richtig beeinfluß, daß die Sekundärwicklung nur so lange einen Strom in der Akkumulator, wie ihre Spannung höher ist als die im wesentlichen konstante Klemmenspannung des Akkumulators. Wenn eine konstante Spannung am Verbraucher erzielt werden soll, so kann dazu eine der bekannten Spannungsregelschaltungen eingesetzt werden, die auf den Halbleiterschalter einwirken. In ähnlicher Weise läßt sich auch eine Kombination einer vorgegebenen Ausgangsspannung mit einem vorgegebenen Ausgangsstrom für einen weiten Bereich von Eingangsspannungen erzielen.

Da in an sich bekannter Weise dafür gesorgt ist, daß der Kern des Wandlers nicht in die Sättigung gerät, d. h. der Halbleiterschalter vorher den durch die Primärwicklung fließenden Strom ausschaltet, bleiben die Wandlerverluste klein. Auch die übrigen Bauteile der Schaltungsanordnung können so dimensioniert sein, daß in ihnen nur sehr kleine Verluste auftreten, so daß insgesamt der Wirkungsgrad groß ist. Die Erwärmung der Schaltung bleibt dann in engen Grenzen, so daß eine Unterbringung auf engstem Raum ohne besondere Kühlung möglich ist.

So kann in Reihe mit der Primärwicklung des Übertragers ein erster Widerstand geschaltet sein und dem über den ersten Widerstand fließenden Primärstrom ein der Spannung der Eingangsspannungsquelle proportionaler Strom überlagert sein, sowie die am ersten Widerstand abfallende Spannung als erstes und zweites Steuersignal an den zweiten Halbleiterschalter angelegt sein. Damit können das erste und das zweite Steuersignal auf besonders einfache Weise abgeleitet und durch Überlagerung von zwei Strömen addiert werden, wobei die über dem Widerstand abfallende Spannung den kritischen, die Ausschaltung des Primärstroms bewirkenden Wert mit steigender Eingangsspannung früher erreicht und damit wiederum der mittlere Energieinhalt des Übertragerkerns eingestellt wird.

Es kann außerdem vorgesehen sein, daß der erste Widerstand von zwei in Reihe geschalteten Widerständen gebildet ist, daß die am Verbindungspunkt der beiden Widerstände abfallende Spannung über einen dritten Widerstand an die Steuerelektrode des als zweiter Halbleiterschalter ausgebideten Halbleiterelementes angelegt ist und daß der zweite Widerstand zwischen die Sekundärwicklung und die Steuerelektrode des zweiten Halbleiterschalters geschaltet ist. Damit wird nicht nur ein schnelleres und damit sichereres und verlustloseres Ausschalten des ersten Halbleiterschalters erreicht, sondern außerdem kann der zweite Widerstand wesentlich größer gemacht werden, so daß die dort auftretenden Verluste kleiner werden.

Zur Einstellung der jeweils gewünschten Leistung am Verbraucher sieht eine Weiterbildung der Erfindung vor, daß der erste und der zweite Widerstand veränderlich ausgebildet sind. Beispielsweise kann in vorteilhafter Weise dann, wenn der Verbraucher aus einem Akkumulator und einem mit einem Einschalter versehenen Motor besteht, mit dem Einschalter ein weiterer Schalter gekoppelt sein, der bei eingeschaltetem Motor den ersten und zweiten Widerstand so verändert, daß der Sperrwandler alleine einen zum Betrieb des Motors ausreichenden Strom liefert. Auf diese Weise läßt sich beispielsweise ein von einem Motor angetriebener, elektrischer Trockenrasierer auch dann an einem beliebigen Stromnetz betreiben, wenn der Akkumulator nicht geladen ist. Andererseits kann bei ausgeschaltetem Motor und damit umgeschalteter Leistung des Sperrwandlers der Ladestrom so eingestellt werden, daß das Gerät beliebig lang an das Netz angeschlossen sein kann, ohne daß es zu einer Schädigung des Akkumulators kommt.

Nach einer weiteren Empfehlung der Erfindung knn außerdem mit dem Akkumulator ein spannungsabhängiger Schalter verbunden sein, der den ersten Halbleiterschalter bei Erreichen einer vorgegebenen Akkumulatorspannung ausschaltet. Damit wird ein Überladen des Akkumulators vermieden, so daß auch bei hohem Ladestrom zur Erzielung einer Schnellladung ein sicherer Betrieb möglich ist. Der spannungsabhängige Schalter kann unter Verwendung eines Transistors verwirklicht werden, dessen Basis-Emitterstrecke in Reihe mit einer Zenerdiode parallel zum Akkumulator geschaltet ist, und dessen Kollektor mit der Steuerelektrode des ersten Halbleiterschalters verbunden ist. Eine zusätzliche Möglichkeit zur gleichzeitigen Überwachung der Temperatur eines Akkumulators, insbesondere eines Nickel-Cadmium-Akkumulators, besteht darin, daß die Zenerdiode mit dem Akkumulator thermisch gekoppelt ist.

Eine zweckmäßige Weiterbildung sieht vor, daß der den Verbraucher speisenden Wicklung über einen Gleichrichter ein Kondensator nachgeschaltet ist, dessen Ladespannung über eine auf die Steuerelektrode des ersten Halbleiterschalters wirkende Zenerdiode oder ein anderes eine Schwellenspannung lieferndes Bauteil konstant gehalten ist.

Es entsteht damit eine Konstantspannungsquelle, deren Spannungshöhe durch die ausreichend engen, üblichen Spannungstoleranzen von Zenerdioden sowie von Festwiderständen bestimmt ist. Gegebenenfalls können aber auch Zenerdioden mit ausgewählten Spannungen und enger tolerierte Widerstände eingesetzt werden. Einstellungen zur Erzielung der jeweils richtigen Spannung unter Berücksichtigung der Fertigungstoleranzen, insbesondere der stark unterschiedlichen Stromverstärkungsfaktoren der als Halbleiterschalter meist verwendeten Transistoren, sind nicht erforderlich, so daß die Herstellung insbesondere bei Kleingeräten verbilligt wird.

Im einfachsten Fall wird die Zenerdiode in Reihe mit einem Widerstand zwischen den Kondensator und den Steueranschluß des ersten Halbleiterschalters gelegt. Es kann jedoch auch vorgesehen sein, daß die Zenerdiode über einen Optokoppler auf die Steuerelektrode des ersten Halbleiterschalters wirkt. Dann besteht die Möglichkeit, eine Netztrennung zu verwirklichen, d. h. der Verbraucher steht nicht in galvanischer Verbindung mit den Speisenetz. Für diese Netztrennung ist es zusätzlich erforderlich, daß der Verbraucherstrom von einer zusätzlichen Sekundärwicklung des Sperrwandlers geliefert wird.

Wenn der Verbraucher beispielsweise bei einem elektrischen Trockenrasierer aus einem Akkumulator und einem über einen Schalter parallel liegenden Motor besteht, ist in Weiterbildung der Erfindung vorgesehen, daß die Ladespannung des Kondensators über einen Widerstand den Akkumulator auflädt, daß mit dem Schalter des Motors ein weiterer, parallel zum Widerstand liegender Schalter zur Umschaltung der Speisespannung vom Ladebetrieb auf den Motorbetrieb gekoppelt ist und daß die Zenerspannung der Zenerdiode größer ist als die Akkumulatorspannung. Da der Ladestrom von einer Konstantspannungsquelle geliefert wird, kann er auf einfache Weise durch Wahl eines festen Widerstandswertes auf die gewünschte Größe eingestellt werden. Beim Motorbetrieb aus dem Netz wird der Widerstand durch den parallel liegenden, mit dem Einschalter des Motors gekoppelten Schalter kurzgeschlossen. Dann erfolgt eine Spannungsstabilisierung direkt durch den Akkumulator auf einem Spannungsniveau, das niedriger als die im Ladebetrieb erzeugte Konstantspannung ist, deren Höhe durch die Zenerdiode bestimmt wird. Der Sperrwandler kann dann seine volle Leistung ohne Begrenzung durch die Zenerdiode liefern, die wegen der niedrigeren Akkumulatorspannung sperrt. Da beide Schalter gleich stark durch den Motorstrom belastet sind, ergibt sich eine gleich gute Kontaktierung. Schließlich ergibt sich beim Motorbetrieb sowohl bei Speisung aus dem Netz als auch aus dem Akkumulator der Vorteil, daß der dann parallel zum Motor liegende, verhältnismäßig große Kondensator eine Entstörung bewirkt.

Zur Betriebsanzeige kann nach einer Empfehlung der Erfindung eine Leuchtdiode in Reihe zum Widerstand geschaltet sein. Die Diode leuchtet dann während des Ladebetriebs hell, weil zu ihrer Speisung der volle Ladestrom zur Verfügung steht.

Es ist häufig erwünscht oder auch erforderlich, für eine Regelung der dem Verbraucher zugeführten Spannung bzw. des fließenden Stromes zu sorgen. Beispielsweise ist bei einer Glühlampe der Kaltwiderstand so klein, daß unter Umständen der Sperrwandler den gewünschten Betriebszustand nicht erreichen kann. Wenn der Verbraucher ein Gleichstrommotor ist, wird häufig eine Drehzahlkonstanthaltung unabhängig von der Last oder zumindest eine gewisse Nachregelung bei Belastung gewünscht, In Weiterbildung der Erfindung kann dazu vorgesehen sein, daß an das in der Leitfähigkeit von der Summe der Steuersignale beeinflußbare Halbleiterelement zusätzlich ein drittes Steuersignal angelegt ist, das dem Verbraucherstrom proportional und den ersten beiden Steuersignalen entgegengerichtet ist. Eine erste praktische Verwirklichung ist dadurch gekennzeichnet, daß der Verbraucher einseitig mit dem in Reihe mit dem ersten Halbleiterschalter liegenden Widerstand verbunden ist, derart, daß der Verbraucherstrom oder ein Äquivalent des Verbraucherstroms entgegengesetzt zum Primärstrom über den Widerstand fließt. Wenn dann der Verbraucherstrom zunimmt, beispielsweise ein Motor abgebremst wird, bewirkt der dann höhere Verbraucherstrom ein späteres Ausschalten des ersten Halbleiterschalters, weil die zum Ausschalten erforderliche Spannung über dem Widerstand später erreicht wird. Eine andere praktische Verwirklichung sieht vor, daß das die Schwellenspannung liefernde Bauteil eine veränderbare Schwellenspannung liefert und daß ein aus dem Verbraucherstrom abgeleiteten Steuersignal an das Bauelement angelegt ist, um die Schwellenspannung abhängig vom Verbraucherstrom zu regeln.

Schließlich kann in Weiterbildung der Erfindung vorgesehen sein, daß das von der Summe der Steuersignale beeinflußte Halbleiterelement eine Zenerdiode ist, die an die Steuerelektrode des ersten Halbleiterschalters angeschlossen ist und an der die an dem ersten Widerstand abfallende Spannung anliegt. Die Zenerdiode wird dann durch die am ersten Widerstand abfallende Spannung bei Erreichen eines vorgegebenen, über den ersten Widerstand fließenden Stromes leitend, so daß dann der über die Primärwicklung des Wandlers fließende Strom nicht mehr ansteigen kann. Dann findet eine Umpolung statt und der erste Halbleiterschalter wird aufgrund der Rückkopplung ausgeschaltet.

Nachfolgend wird die Erfindung anhand der Zeichnungen beschrieben. Es zeigen

Figur 1 ein Ausführungsbeispiel einer Schaltungsanordnung nach der Erfindung zur Verwendung in einem motorbetriebenen Trockenrasierer mit Akkumulator;

Figur 2 Kurvendiagramme für den zeitlichen Verlauf von Spannungen und Strömen an bestimmten Punkten der Schaltungsanordnung nach Fig. 1;

Figur 3 ein Diagramm für die gelieferten Ausgangsströme in Abhängigkeit von der Eingangsspannung;

Figur 4 eine Abwandlung des Ausführungsbeispiels nach Fig. 1;

Figur 5 ein Diagramm zur Erläuterung des Verhaltens der spannungs- und temperaturabhängigen Ladeschaltung in Fig. 4;

Figur 6 ein Ausführungsbeispiel, bei dem eine Konstantspannungsquelle zur Speisung des Verbrauchers verwirklicht ist;

Figur 7 ein Ausführungsbeispiel ähnlich dem nach Fig. 6 mit zusätzlicher Netztrennung;

Figur 8 ein Ausführungsbeispiel zur Speisung einer Gasentladungslampe.

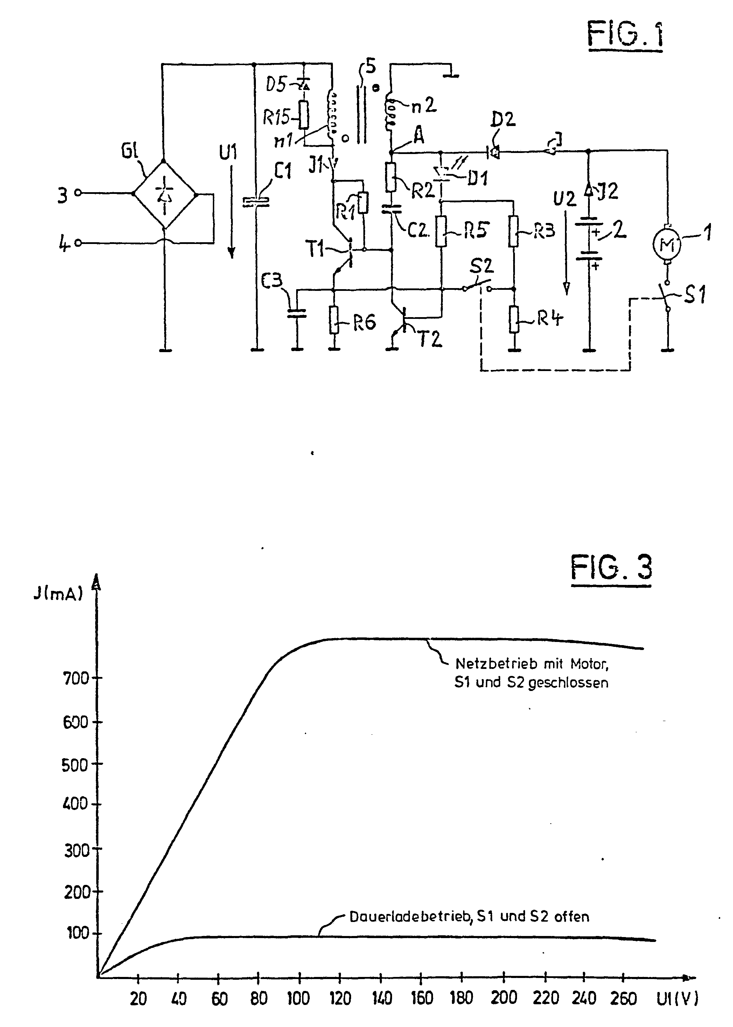

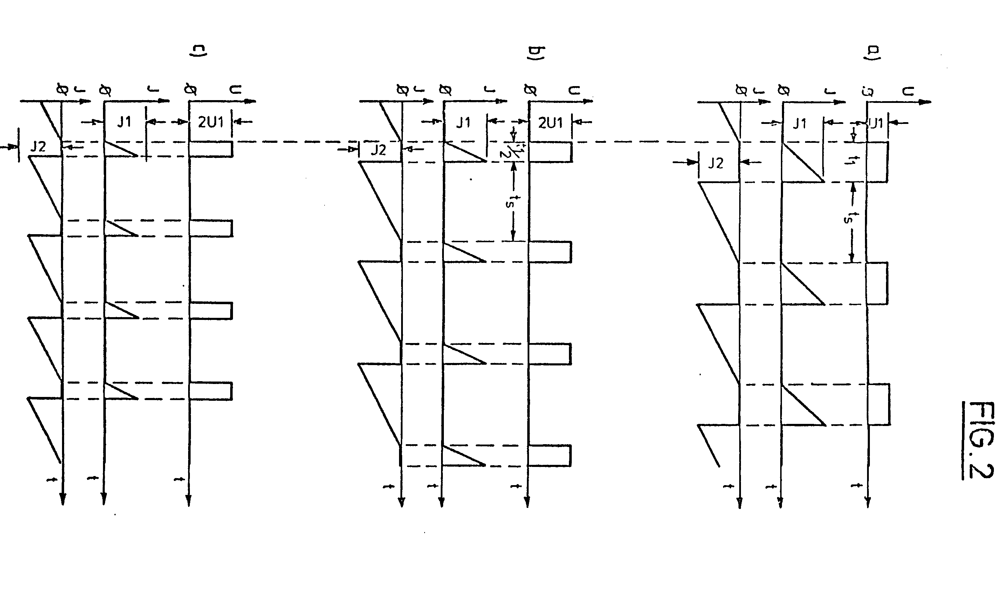

Die Schaltungsanordnung gemäß Fig. 1 ist zum Einbau in einen elektrischen Trockenrasierer bestimmt, der mit einem kleinen Gleichstrom-Motor 1 und einem aus mehreren Zellen bestehenden Nickel-Cadmium-Akkumulator 2 ausgestattet ist. Über einen Einschalter S1 wird der Motor geschaltet. Die Netzspannung, die eine Gleich- oder Wechselspannung sein kann, wird den Klemmen 3, 4 zugeführt. mittels einer Gleichrichterbrücke GI gleichgerichtet und durch einen Kondensator C1 geglättet. Man erhält eine Gleichspannung U1, deren Betrag im Fall einer Wechselspannung etwa gleich dem 1,4-fachen des Effektivwertes der Wechselspannung ist. Für die folgende Betrachtung wird angenommen, daß die Schaltungsanordnung zunächst elektrisch in Ruhe ist und die beiden Transistoren als Halbleiterschalter T1 und T2 sperren.

Sobald die Gleichspannung U1 an die Reihenschaltung aus der Primärwicklung n1 des mit einem Ferritkern ausgestatteten Übertragers 5, dem Transistor T1 und dessen Widerstand R6 als Emitterwiderstand angelegt ist, kann über den zwischen den Kollektor und die Basis des Transistors T1 gelegten Widerstand R1 ein Basisstrom fließen. Es genügen bereits einige Mikroampere Basisstrom, um im Transistor T1 einen kleinen Kollektorstrom zu erzeugen, der durch die Wicklung n1 des Übertragers 5 fließt. Die damit verbundene Änderung des magnetischen Flusses im Übertrager induziert am Punkt A der Sekundärwicklung n2 eine positive Spannung, die über einen Widerstand R2 und einen Kondensator C2 auf die Basis des Transistors T1 geführt wird und einen größeren Basisstrom hervorruft. Durch diese positive Rückkopplung schaltet der Transistor T1 schnell vollständig ein, wobei nur eine kleine Restspannung zwischen seinem Emitter und Kollektor verbleibt. Der Basisstrom wird im wesentlichen durch den Widerstand R2 begrenzt.

Mit dem Einschalten des Transistors T1 steigt der durch die Wicklung n1 des Übertragers fließende Strom I1 linear an, bis über dem Widerstand R6 eine dem Strom I1 proportionale Spannung von ca. 700 mV anliegt, wobei die Leuchtdiode D1 und die Widerstände R3, R4, R5 zunächst außer Acht gelassen werden. Diese Spannung läßt im Transistor T2 einen Basisstrom fließen, wodurch der Transistor T2 einschaltet und die Basis des Transistors T1 zum Bezugspotential zieht. Dadurch leitet der Transistor T1 weniger gut, so daß der durch die Wicklungen n1 fließende Strom I1 kleiner wird. Durch die zugehörige Verringerung des Magnetflusses im Kern des Übertragers 5 erfolgt eine Umpolung der Sekundärspannung am Punkt A, die über den Widerstand R2 und den Kondensator C2 rückgekoppelt wird, so daß der Transistor T1 schließlich vollständig ausschaltet. Die Abschaltgeschwindigkeit wird durch den Kondensator C3 parallel zum Widerstand R6 vergrößert, da der Kondensator C3 die Spannung am Emitter des Transistors T1 kurzzeitig hält, wodurch die Basis-Emitterspannung des Transistors T1 im Abschaltmoment negativ wird.

Während der Sperrphase des Transistors T1 fließt die im Kern des Übertragers 5 gespeicherte magnetische Energie in Form eines Stroms aus der Sekundärwicklung n2 ab. Dabei leitet die Diode D12, und - der Schalter S1 sei als geöffnet angenommen - der Akkumulator 2 erhält einen linear abfallenden Ladestrom zugeführt. Ein negativer, abfallender Strom über den Widerstand R2 und den Kondensator C2 hält den Transistor T1 gesperrt, bis die im Kern des Übertragers 5 gespeicherte Energie abgeflossen ist. Erst danach kann wieder ein Anlaßstrom über den Widerstand R1 in die Basis des Transistors T1 fließen, der den bereits geschilderten Einschaltvorgang auslöst.

Die Dauer der Sperrphase des Übertragers ist abhängig von der Spannung des Akkumulators 2. Diese ist, vom Übertrager aus gesehen, annähernd konstant. Es kann nur Strom in den Akkumulator 2 fließen, so lange die Beziehung

$$|N \cdot d\Phi/dt + U_D| > |U2|$$

erfüllt ist. Dabei bedeuten:
N = Anzahl der Windungen der Wicklung n2,
$d\Phi/dt$ = Änderung des Magnetflusses über die Zeit,
$U_D$ = an der Diode D2 abfallende Spannung,
U2 = Akkumulatorspannung.

Ist zu Beginn jeder Sperrphase der Energieinhalt des Übertragers 5 stets gleich, so ergibt sich ein im zeitlichen Mittel konstanter Ladestromfluß in den Akkumulator 2. Wenn der Akkumulator jedoch tief entladen oder kurzgeschlossen ist, so verlängert sich die Sperrphase entsprechend. Dadurch wird eine automatische Strombegrenzung im Störungsfall erreicht, beispielsweise dann, wenn der Motor 1 blockiert oder ein anderer Kurzschluß vorliegt.

Die bisher beschriebene Schaltung bewirkt, daß der Übertrager 5 im Abschaltzeitpunkt immer den gleichen Energieinhalt besitzt. Wie oben festgestellt, bedeutet dies bei konstanter Akkumulatorspannung U2 gleiche Sperrdauer $t_s$ (Fig. 2) des Transistors T1 und pro Sperrzyklus gleichen Ladestromverlauf I2 $(t_s)$ für den Akkumulator 2. Der Anstieg des Stroms I1 durch die Wicklung n1 ist proportional dem Betrag der angelegten Spannung U1. Da die Abschaltung des Transistors T1 in Abhängigkeit von seinem Emitterstrom und damit in guter Näherung vom Strom I1 erfolgt, stellt sich die Schaltung auf Änderungen der Versorgungsspannung U1 ein.

Wie in Fig. 2 dargestellt ist, wird bei Verdopplung der Eingangsspannung U1 auf den Wert 2 U1 (Fig. 2b) die Einschaltzeit $t_1$ des Transistors T1 halbiert. Bei konstanter Ausschaltzeit $t_s$ führt dies zu einer Erhöhung der Schaltfrequenz und damit einer Vergrößerung des effektiven Ladestroms I2 für den Akkumulator 2.

Hinzu kommt, daß die transformierte Spannung am Punkt A (Fig. 1) der Eingangsspannung U1 proportional ist. Bei steigender Eingangsspannung wird damit der Basisstrom des Transistors T1 erhöht. Der Transistor T2 muß dann einen größeren Strom aufwenden, um die Basisspannung des Transistors T1 zum Zwecke der Ausschaltung zu verringern. Die Folge ist, daß sich auch hierdurch der zeitliche Mittelwert des Ladestroms I2 mit der Eingangsspannung U1 ändert. Durch Verwendung eines Thyristors anstelle des Transistors T2 könnte man zwar diese Abhängigkeit verringern, nicht aber beseitigen.

Beide Einflüsse der Eingangsspannung U1 auf den Ladestrom I2. nämlich Änderung des mittleren Ladestroms durch eine Frequenzänderung des Wandlers und Verschiebung der Stromschwelle des Transistors T1, werden dadurch kompensiert, daß dem durch den Emitterwiderstand R6 fließenden Strom I1 ein Strom überlagert wird, der der Eingangsspannung U1 direkt proportional ist. Dadurch wird der Ausschaltzeitpunkt des Transistors T1 mittels des Transistors T2 in Abhängigkeit von der Eingangsspannung U1 zeitlich verlegt. In Fig. 2c ist gezeigt, daß im Gegensatz zu dem in Fig. 2b dargestellten Fall ohne Kompensation bei Verdoppelung der Eingangsspannung auf den Wert 2 U1 das Ausschalten des Transistors T1 bei kleinerem Spitzenwert des Stromes I1 erfolgt. bei dem der die Ausschaltung auslösende Strom durch den Widerstand R6 zusätzlich noch einen der Eingangsspannung U1 proportionalen Stromanteil enthält. Damit ist auch der Energieinhalt des Übertragers kleiner.

Der der Eingangsspannung U1 proportionale Stromanteil könnte durch einen Widerstand (nicht gezeigt) gewonnen werden, der zwischen dem Emitter des Transistors T1 und die Spannung U1 am oberen Ende der Wicklung n1 gelegt ist. Ein solcher Widerstand würde aber eine hohe Verlustleistung bewirken. Der Punkt A weist während der Einschaltphase des Transistors T1, also während des Strom- und Spannungsanstiegs am Widerstand R6, ein Potential auf, das der Eingangsspannung U1 proportional ist. Der Wandler arbeitet insofern als normaler Transformator. Der an den Verbindungspunkt A angeschaltete Widerstand R5 liefert demgemäß wegen der wesentlich niedrigeren Spannung am Punkt A auf besonders verlustarme Weise den gewünschten Stromanteil für den Widerstand R6, der der Eingangsspannung U1 proportional ist. Bei richtiger Dimensionierung des Widerstandsverhältnisses von R5 zu R6 läßt sich in weiten Bereichen ein von der Eingangsspannung U1 unabhängiger Ladestrom I2 des Akkumulators 2 einstellen.

In Reihe mit dem Widerstand R5 ist eine Leuchtdiode D1 zur Betriebsanzeige geschaltet. Aufgrund ihrer Sperrwirkung führt die Diode nur während der Einschaltphase des Transistors T1 einen Strom. Da die Einschaltdauer annähernd umgekehrt proportional zum Betrag der Eingangsspannung U1 ist, erfolgt automatisch eine Helligkeitsregelung der Leuchtdiode. Außerdem trennt die Leuchtdiode D1 den Widerstand R5 und die noch zu erläuternden Widerstände R3, R4 während der Sperrphase vom Punkt A ab. Dadurch werden Verluste vermieden.

Im dargestellten Ausführungsbeispiel wird die Schaltungsanordnung in einem mit dem Gleichstrom-Motor 1 betriebenen Elektrorasierer verwendet. Bei geöffnetem Schalter S1 arbeitet die Schaltung im Dauerladebetrieb. Der Motor 1 steht still, es fließt der Dauerladestrom I2, und die Leuchtdiode D1 brennt. Schließt man den Schalter S1 und damit auch den mechanisch gekoppelten Schalter S2, so wird der vom Übertrager 5 abgegebene Strom etwa verzehnfacht, weil dem Widerstand R5 der Widerstand R3 und dem Widerstand R6 der Widerstand R4 parallelgeschaltet werden. Der Motorl läuft dann ohne Entladung des Akkumulators 2, der jetzt nur als Spannungsstabilisator wirkt, und die Leuchtdiode D1 brennt.

In Fig. 3 ist die Abhängigkeit des Wandlerausgangsstroms in Abhängigkeit von der Eingangsspannung U1 für den Ladebetrieb und den Motorbetrieb dargestellt. Man erkennt, daß in beiden Betriebsfällen die Eingangsspannung U1 im Bereich zwischen etwa 90 und 270 V schwanken darf, ohne den Motorstrom oder den Ladestrom wesentlich zu beeinflussen.

Es sei noch nachgetragen, daß der Kondensator C2 eine Glechstromtrennung bewirkt. Der Wert des Widerstands R1 ist nämlich um mehrere Zehnerpotenzen größer als der des Widerstands R2. Ohne die Glechstromtrennung die ein Abfließen des durch den Widerstand R1 gelieferten Stroms über den Widerstand R2 verhindert, müßte der Wert des Widerstands R1 wesentlich kleiner gewählt werden, wodurch höhere Verluste entstehen.

Die Reihenschaltung mit der Diode D5 und dem Widerstand R15, die parallel zur Primärwicklung n1 liegt, sorgt insbesondere im Ladebetrieb, also bei der Abgabe kleiner Leistung, für eine Verlängerung der Sperrphase.

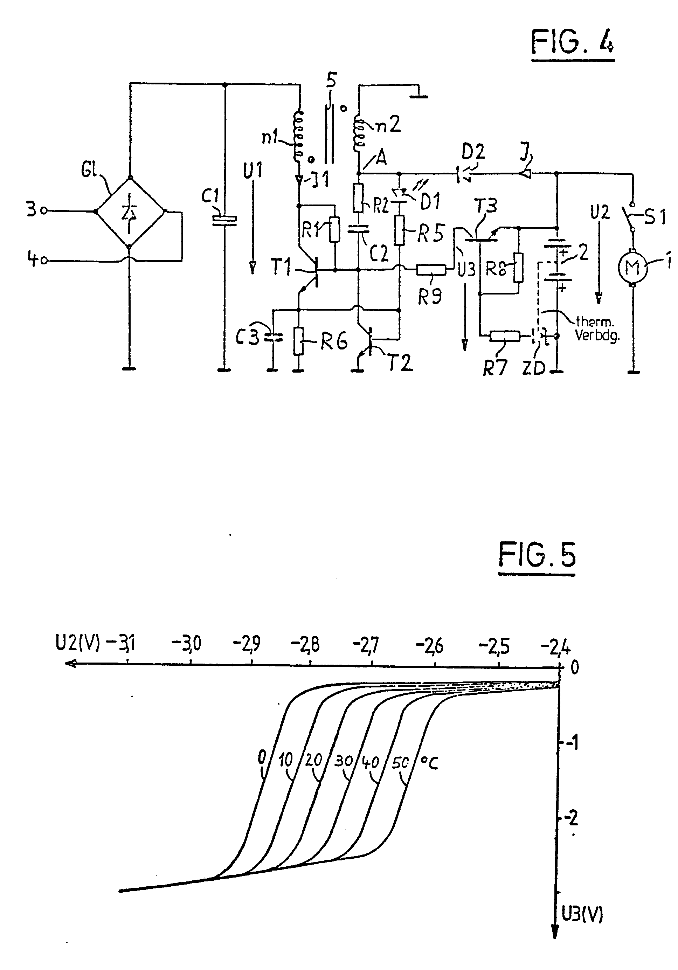

Fig. 4 zeigt ein abgewandeltes Ausführungsbeispiel der Schaltungsanordnung nach Fig. 1. Die eigentliche Wandlerschaltung mit den Transistoren T1, T2 und dem Übertrager 5 sowie den Widerständen R1, R2, R5, R6 und der Leuchtdiode D1 ist auch hinsichtlich der Funktion unverändert geblieben. Statt einer Umschaltung der Wandlerleistung zwischen Lade- und Motorbetrieb mittels des Schalters S2 und der Widerstände R3, R4 wird jedoch im Falle der Schaltungsanordnung nach Fig. 4 bei ausgeschaltetem Motor 1 eine Schnell-Ladung des wiederum aus Nickel-Cadmium-Zellen bestehenden Akkumulators 2 mit hohem Strom vorgenommen. Dann ist jedoch eine rechtzeitige Abschaltung des Ladestroms erforderlich, um eine Beschädigung des Akkumulators zu vermeiden. Die Abschaltung erfolgt mit einem spannungsabhängigen Schalter, der einen Transistor T3 enthält. Die Basis-Emitterstrecke des Transistors T3 ist in Reihe mit einem Widerstand R7 und einer Zenerdiode ZD parallel zum Akkumulator 2 geschaltet. Wenn dessen Spannung U2 während des Ladevorgangs den durch die Zenerdiode ZD vorgegebenen Wert übersteigt, so beginnt der Transistor T3 durchzuschalten, und die Spannung U3 an seinem Kollektor wird negativ.

Fig. 5 zeigt den Verlauf der Kollektorspannung U3 in Abhängigkeit von der Akkumulatorspannung U2 bei verschiedenen Temperaturen. Der sich ergebende Temperaturkoeffizient der Spannung U3 liegt bei etwa 5 mV/°C und ist damit dem Temperaturgang von zwei in Reihe geschalteten Nickel-Cadmium-Zellen angepaßt. Um eine möglichst direkte Temperaturerfassung der Akkumulatorzellen zu erreichen, ist das Gehäuse der Zenerdiode ZD thermisch mit dem Akkumulator verbunden, wie in Fig. 4 gestrichelt angedeutet ist.

Solange die Akkumulatorspannung U2 unter dem durch die Zenerdiode ZD festgelegten Wert liegt, fließt kein Strom über die Zenerdiode, und der Transistor T3 sperrt. Der Wandler schwingt dann und liefert Strom zum Schnell-Laden des Akkumulators 2 bzw. zur Speisung des Motors 1. Wenn die Spannung U2 des Akkumulators 2 einen kritischen Wert übersteigt, der unter Berücksichtigung der Temperatur die volle Ladung angibt, fließt ein Strom über die Zenerdiode ZD und den Widerstand R7, der sich auf die Basis des Transistors T3 und den Widerstand R8 aufteilt. Der Transistor T3 schaltet durch diesen Basisstrom teilweise ein, und es fließt von dem negativen Anschluß des Akkumulators 2 ein Strom über den Widerstand R9 zur Basis des Transistors T1. Sobald der Strom durch den Widerstand R9 während der Einschaltphase des Transistors T1 die Summe der über die Widerstände R1 und R2 fließenden Basisstromanteile des Transistors T1 neutralisiert, kann der Transistor T1 nicht mehr durchschalten. Der Wandler schwingt nicht mehr an, und es herrscht statischer Betrieb. Das Basispotential des Transistors T1 wird jetzt nur durch die Widerstände R1 und R9 bestimmt. Der Widerstand R2 ist durch den Kondensator C2 abgetrennt. Erst wenn der Strom durch den Widerstand R9 unter den durch den Widerstand R1 begrenzten Wert abgefallen ist, kann das Basispotential des Transistors T1 auf einen Wert ansteigen, der das Wiederanschwingen des Wandlers ermöglicht.

Da der jeweils durch den Widerstand R9 fließende Strom zum Abschalten des Wandlers vorwiegend durch den Widerstand R2 und der Strom zum Einschalten vom Widerstand R1 abhängt, ergibt sich ein der Differenz dieser Ströme entsprechendes, erwünschtes Hystereseverhalten. Der Wandler schaltet also nicht dauernd zwischen dem eingeschalteten und ausgeschalteten Zustand hin und her. Vielmehr muß die Spannung U2 des Akkumulators erst wieder um einen gewissen Betrag abgesunken sein, bevor der Ladestrom erneut eingeschaltet wird. Da beim Ausschalten des Wandlers auch jeweils die Leuchtdiode D1 erlischt, ist auf einfache Weise der Ladezustand des Akkumulators festzustellen.

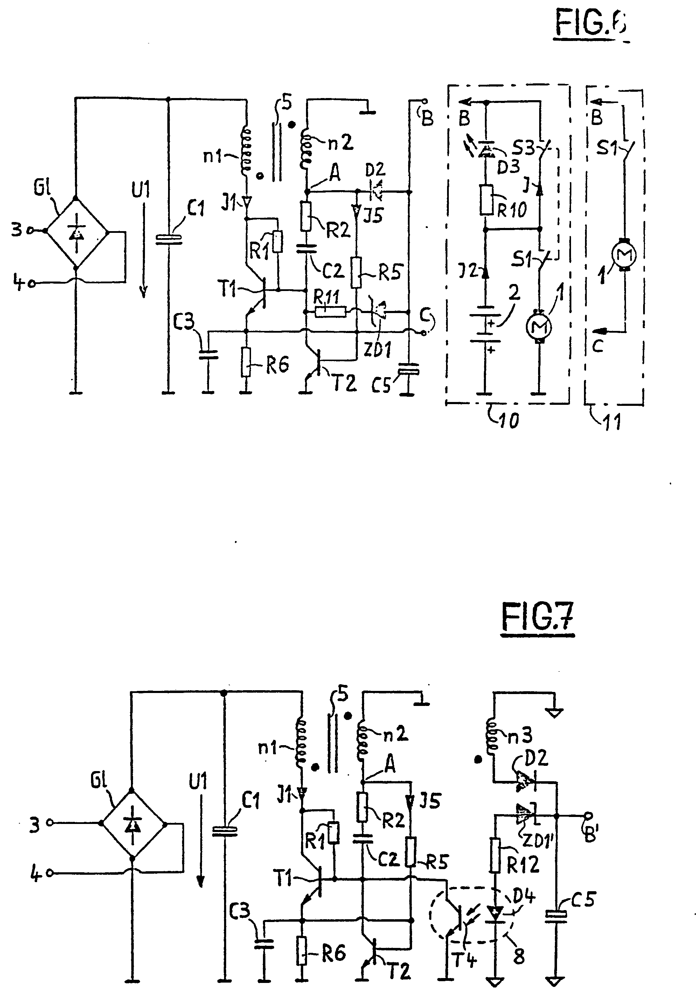

Das Ausführungsbeispiel gemäß Fig. 6 entspricht im Prinzip dem Ausführungsbeispiel nach Fig. 1. Es sei zunächst angenommen, daß an den Punkt B als Verbraucher die strichpunktiert eingerahmte Schaltung 10 angeschlossen ist, und es sei die Funktion der Schaltung beim Ladebetrieb, also bei geöffneten Schaltern S1 und S3, betrachtet. Die beiden Schalter sind, wie gestrichelt angedeutet, mechanisch miteinander gekoppelt. Sobald die Ladespannung des Kondensators C5 die Zenerspannung der Zenerdiode ZD1 übersteigt, fließt ein durch den Widerstand R11 begrenzter Strom zur Basis des Transistors T1, der den Anlaßstrom über R1 neutralisiert und damit den Transistor T1 ausgeschaltet hält, solange die Zenerdiode ZD1 aktiv ist. Sobald die Zenerdiode sperrt, kann ein Anlaßstrom in die Basis von T1 fließen und damit den Wandler starten. Es ergibt sich eine Konstantspannungsregelung, d. h. die Spannung am Kondensator C5 wird auf einem durch die Zenerdiode ZD1 bestimmten Wert gehalten. Wenn leicht erhältliche Zenerdioden mit verhältnismäßig geringer Toleranz verwendet werden, streut die Konstantspannung von Gerät zu Gerät nur sehr wenig. Bei konstanter Spannung fließt dann ein Ladestrom in den Akkumulator, der bei gegebener Spannung des Akkumulators im wesentlichen durch den Widerstand R10 bestimmt wird und daher leicht in einem gewünschten Toleranzbereich zu halten ist. Die Leuchtdiode D3, die ebenfalls vom Ladestrom durchflossen ist, zeigt den Ladebetrieb hell an.

Schließt man die beiden Schalter S1 und S3 bei anliegender Eingangsspannung U1, so läuft der Motor an, und der Widerstand R10 wird überbrückt. Dadurch sinkt die Spannung des Kondensators C5 auf das Spannungsniveau des Akkumulators ab. Da die Akkumulatorspannung kleiner ist als die Zenerspannung, sperrt die Zenerdiode ZD1 dauernd, und die Leistungsabgabe des Wandlers wird nicht mehr begrenzt. Der Motor 1 läuft dann ohne Entladung des Akkumulators 2, der jetzt nur als Spannungsstabilisator wirkt. Der Wandler arbeitet dabei als Konstantstromquelle. Der Motorstrom fließt dabei über Schalter S3 und S1, so daß beide Schaltkontakte etwa gleich belastet sind und (wegen der Selbstreinigung) durch den verhältnismäßig hohen Strom keine Kontaktschwierigkeiten zeigen. Man erkennt außerdem, daß bei Motorbetrieb der Kondensator C5 direkt parallel zum Motor1 liegt, wodurch Funkenstörungen am Kollektor des Motors gedämpft werden. Als weiterer Vorteil gegenüber der Schaltungsanordnung gemäß Fig. 1 ist zwischen dem eigentlichen Wandler und dem Motorteil einschließlich der Schalter S1 und S3 sowie der Bauelemente D3 und R10 nur noch eine einzige Verbindungsleitung erforderlich, statt bisher 3 Leitungen wegen des Schalters S2.

Die Wandlerschaltung stellt sich automatisch - ohne Eingriff z. B. durch einen Schalter - auf die außerhalb eingestellten Betriebsparameter ein. Der Schaltungsausgang am Verbindungspunkt B ist im Dauerbetrieb leerlauf- und kurzschlußsicher. Bei einem Leerlauf begrenzt die Regelung über die Zenerdiode ZD1 die abgegebene Leistung unter Konstanthaltung der Ladespannung von C5. Im Kurzschlußfall verlängern sich die Sperrphasen des Transistors T1, weil der Wandlerkern 5 dann bei jedem Zyklus wegen der fehlenden Gegenspannung länger einen Strom liefert. Dadurch wird die abgegebene Leistung auf einen ungefähren Wert begrenzt. Wie bei der Schaltungsanordnung nach Fig. 1 ist ein Betrieb an Gleich- und Wechselstrom zwischen ca. 90 und 270 V möglich. Bei entsprechender Dimensionierung von R1 liefert die Schaltung sogar bei einer Eingangsspannung von bis hinab zu 12 V = noch einem ausreichenden Ladestrom, so daß ein Aufladen des Akkumulators im Auto o. ä. ohne Umschaltung des Eingangs erfolgen kann.

Anstelle der Schaltung 10 kann die lediglich den Motor 1 mit Schalter S1 enthaltende Schaltung 11 an die Punkte B und C angeschlossen werden. Dann ist der Fußpunkt des Motors 1 statt mit dem gemeinsamen Bezugspotential mit dem Verbindungspunkt zwischen dem Widerstand R6 und dem Emitter des Transistors T1 verbunden. Der Motorstrom fließt jetzt über den Widerstand R6, und zwar, wie die Polung der Diode D2 zeigt, in entgegengesetzter Richtung wie die Ströme I1 und I5. Bei steigendem Motorstrom, d. h. stärkerer Belastung des Motors, erreicht dann die Spannung über dem Widerstand R6 später den zum Abschalten erforderlichen Wert, so daß der Transistor T1 für jeden Zyklus länger leitet und demgemäß eine höhere Leistung an den Motor geliefert wird. Innerhalb gewisser Grenzen läßt sich damit eine Drehzahlkonstanthaltung erreichen.

Auch ohne die vorstehend beschriebene Anschaltung des Motors an den Widerstand R6 kommt eine gewisse Nachregelung des Motorstroms dadurch zustande, daß bei einer Abbremsung des Motors und damit höherer Stromaufnahme die Wandlerfrequenz ansteigt. Das bedeutet gleichzeitig, daß der Effektivwert der Spannung am Kondensator C5, die sich aus einer Gleichspannung und einem überlagerten Wechselspannungsteil zusammensetzt, wegen der höheren Frequenz des Wechselstromanteils geringfügig größer wird.

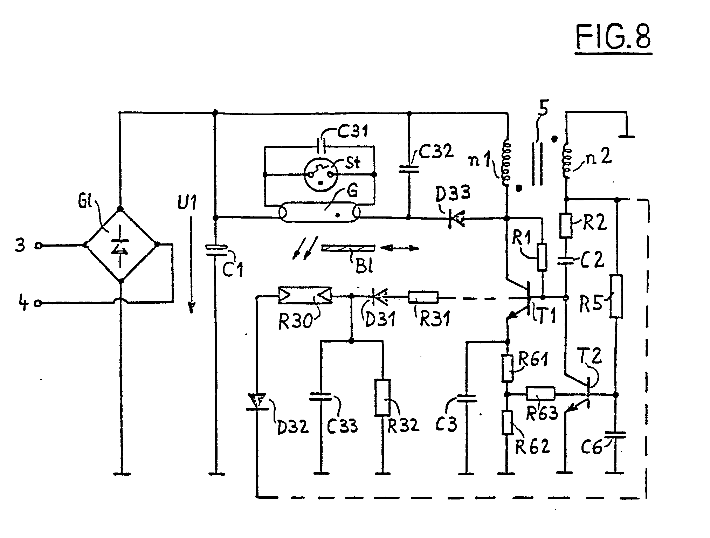

Das Ausführungsbeispiel gemäß Fig. 7 entspricht im wesentlichen dem Ausführungsbeispiel nach Fig. 6. Bauteile mit im wesentlichen gleicher Funktion tragen daher die gleichen Bezugzeichen. Abweichend von dem Ausführungsbeispiel nach Fig. 6 wird die Ausgangsleistung von einer weiteren, getrennten Sekundärwicklung n3 geliefert, die eine Netztrennung ermöglicht. Außerdem kann jetzt durch entsprechende Polung der Diode D2 erreicht werden, daß der Kondensator C5 auf eine positive Spannung gegen den Bezugspunkt aufgeladen wird. Abgesehen von der anderen Polung können an den Ausgangspunkt B' die gleichen Bauteile wie beim Ausführungsbeispie nach Fig. 6 angeschaltet werden, also der Motor 1, der Akkumulator 2 und die zugeordneten Schaltkontakte S1, S3 sowie die Diode D3 und der Widerstand R10.

Wegen der Netztrennung, also der galvanischen Trennung zwischen der Ausgangsspannung und der an den Punkten 3 und 4 liegenden Netzeingangsspannung wirkt im Gegensatz zur Schaltung nach Fig. 6 die zur Erzeugung einer Konstantstromquelle benutzt Zenerdiode ZD1- nicht direkt auf die Basis des Transistors T1, sondern sie ist über einen Widerstand R12 in Reihe mit der Leuchtdiode D4 eines Optokopplers 8 geschaltet. Der Fototransistor T4 des Optokopplers 8 ist an die Basis des Transistors T1 angeschaltet,

Wenn die Ladespannung des Kondensators C5 die Zenerspannung der Zenerdiode ZD1' zuzüglich der Durchlaßspannung der Leuchtdiode D4 erreicht, wird der Fototransistor T4 leitend und neutralisiert wie beim Ausführungsbeispiel nach Fig. 6 den über den Widerstand R1 fließenden Anlaßstrom für den Transistor T1, so daß der Wandler nicht anschwingen kann.

Wie eingangs erläutert, kann der zweite Halbleiterschalter statt des Transistors T2 eine Zenerdiode sein, die dann zwischen die Basis des Transistors T1 und das Bezugspotential geschaltet wird. Die Verbindung vom Emitter des Transistors T1 zur Steuerelektrode des Transistors T2 entfällt, weil die Zenerdiode keine eigene Steuerelektrode besitzt, sondern direkt durch die anliegende Spannung leitend bzw. nicht leitend gesteuert wird. Erreicht nach dem Einschalten des Transistors T1 die über dem Widerstand R6 abfallende Spannung zuzüglich der Basis-Emitterspannung des Transistors T1 die Zenerspannung, so kann der über die Wicklung n1 fließende Primärstrom nicht weiter ansteigen. Die dadurch bewirkte Umpolung schaltet den Transistor T1 aufgrund der Rückkopplung über den Kondensator C2 aus. Es ergibt sich also ebenfalls eine Leistungsbegrenzung,

Die Schaltungsanordnung gemäß Fig. 8 entspricht im grundsätzlichen Aufbau wiederum den bisher beschriebenen Anordnungen. Gleiche Schaltungselemente mit gleicher Funktion sind daher wiederum mit den gleichen Bezugszeichen wie in den vorhergehenden Schaltungsanordnungen versehen.

Mit der Schaltung gemäß Fig. 8 wird eine Gasentladungslampe in Form einer Leuchtstoffröhre G gespeist, die über eine Diode D33 an die Primärwicklung n1 angeschaltet ist. Zum Starten liegt parallel zur Leuchtstofflampe in der üblichen Weise ein Starterst mit parallel geschaltetem Kondensator C31. Statt an die Primärwicklung n1 könnte die Lampe auch an eine getrennte Wicklung angeschlossen werden, beispielsweise dann, wenn eine Netztrennung erwünscht ist. Der Kondensator C32, der vor dem Zünden auf eine höhere Spannung aufgeladen wird, verbessert das Zündverhalten.

Wie bei den vorhergehenden Schaltungsanordnungen wird während der Durchflußphase Energie im Übertragerkern 5 gespeichert, die dann über die Diode D33 in die Leuchtstofflampe G abfließt, wenn die Lampe einmal gezündet worden ist. Da der Übertragerkern wie bei den vorherigen Ausführungsbeispielen im zeitlichen Mittel jeweils stets die gleiche Energie speichert, ergibt sich ein von der Eingangsspannung in weitem Umfang unabhängiger Lichtstrom. Gegenüber üblichen Vorschaltgeräten für Leuchtstofflampen in Form einer Drossel kann außerdem das Volumen verringert werden, und es läßt sich ein besserer Wirkungsgrad mit kleineren Verlusten verwirklichen.

Abweichend von den früher beschriebenen Ausführungsbeispielen ist bei der Schaltungsanordnung nach Fig. 8 der Emitterwiderstand des Transistors T1 in zwei in Reihe geschaltete Widerstände R61 und R62 aufgeteilt. Der dem Emitterwiderstand zugeführte, der Eingangspannung proportionale Strom, der über den Widerstand R5 fließt, wird über einen weiteren Begrenzungswiderstand R63 zum Verbindungspunkt zwischen den Widerständen R61 und R62 geführt. Die Basis des Transistors T2 liegt nunmehr am Verbindungspunkt der Widerstände R5 und R63. Mit dieser Schaltungsvariante, die auch bei den vorhergehenden Schaltungsanordnungen eingesetzt werden kann, läßt sich ein verbessertes Abschaltverhalten des Transistors T1 sowie eine Verringerung der Regelverluste insbesondere im Widerstand R5 erreichen, weil dieser Widerstand wesentlich größer als bei den anderen Ausführungsbeispielen gewählt werden kann. Der an der Basis des Transistors T2 liegende Kondensator C6 verhindert eine Schwingneigung beim Ausschalten des Transistors T1.

In der Schaltung gemäß Fig. 8 ist zusätzlich eine Helligkeitsregelung für die Leuchtstofflampe G verwirklicht. In der Sperrphase des Übertragers 5 wird der Wicklung n2 über die gestrichelt dargestellte Leitung und eine entsprechend gepolte Diode D32 eine Spannung entnommen, die über einen Fotowiderstand R30 einen Kondensator C33 mit parallelem Entladewiderstand R32 auf eine gegen Masse negative Spannung auflädt. Die negative Spannung sperrt über die Diode D31 und den Widerstand R31 den Transistor T1 für eine bestimmte Zeit, so daß durch diese Beeinflussung der Sperrdauer die Lichtstärke, der Leuchtstofflampe G beeinflußt werden kann. Eine Regelung wird dadurch erzeilt, daß ein Teil des Lichts der Lampe G über eine mechanisch einstellbare Blende Bl auf den Fotowiderstand R30 fällt und auf diese Weise die mittels der Blende Bl eingestellte Lichtstärke konstant gehalten wird.

**Patentansprüche**

1. Schaltungsanordnung zur geregelten Speisung eines Verbrauchers aus Eingangsspannungsquellen unterschiedlicher Spannung unter Verwendung eines selbstschwingenden Sperrwandlers mit einem Übertrager (5), dessen Primärwicklung (n1) über einen steuerbaren ersten Halbleiterschalter (T1) mit der Eingangsspannungsquelle verbunden ist und der über eine seiner Wicklungen (n2) den Verbraucher speist, und mit einem Halbleiterelement (T2), dessen Leitfähigkeit von der Summe zweier Steuersignale beeinflußbar ist, von denen das eine dem über die Primärwicklung fließenden Primärstrom (11) proportional ist, so daß das Halbleiterelement (T2) die Ausschaltung des ersten Halbleiterschalters und damit dessen Einschaltdauer abhängig von einem Wert des Primärstromes durchführt, der in Abhängigkeit vom zweiten, der Spannung (U1) der Eingangsspannungsquelle (3, 4) proportionalem Steuersignal so veränderbar ist, daß bei steigender Eingangsspannung die Ausschaltung bei abnehmenden Werten des Primärstromes erfolgt, dadurch gekennzeichnet, daß das der Spannung (U1) der Eingangsspannungsquelle proportionale Steuersignal während der Durchlaßphase des ersten Halbleiterschalters von der Spannung an einer Sekundärwicklung (n2) des Übertragers (5) geliefert wird, derart, daß der mittlere Energieinhalt des Übertragerkerns so eingestellt wird, daß der Ausgangsstrom bei vorgegebener Ausgangsspannung unabhängig von der Eingangsspannung im wesentichen konstant bleibt.

2. Schaltungsanordnung nach Anspruch 1, dadurch gekennzeichnet, daß in Reihe mit der Primärwicklung (n1) des Übertragers (5) ein erster Widerstand (R6) geschaltet ist, daß dem über den ersten Widerstand (R6) fließenden Primärstrom (I1) ein der Spannung (U1) der Eingangsspannungsquelle (3, 4) proportionaler Strom (über R5) überlagert ist, und daß die an dem ersten Widerstand (R6) abfallende Spannung als erstes und zweites Steuersignal an das Halbleiterelement (T2) angelegt ist.

3. Schaltungsanordnung nach Anspruch 1 oder 2, dadurch gekennzeichnet, daß der der Spannung (U1) der Eingangsspannungsquelle (3, 4) proportionale Stromanteil durch einen zweiten Widerstand (R5) eingestellt ist.

4. Schaltungsanordnung nach Anspruch 3, dadurch gekennzeichnet, daß der erste Widerstand von zwei in Reihe geschalteten Widerständen (R61, R62) gebildet ist, daß die am Verbindungspunkt der beiden Widerstände abfallende Spannung über einen dritten Widerstand (R63) an die Steuerelektrode des als zweiter Halbleiterschalter (T2) ausgebildeten Halbleiterelementes angelegt ist, und daß der zweite Widerstand (R5) zwischen die Sekundarwicklung (n2) und die Steuerelektrode des zweiten Halbleiterschalters (T2) geschaltet ist (Fig. 8).

5. Schaltungsanordnung nach Anspruch 3 oder 4, dadurch gekennzeichnet, daß in Reihe mit dem zweiten Widerstand (R5) eine Anzeige vorrichtung, vorzugsweise eine Leuchtdiode (D1) geschaltet ist.

6. Schaltungsanordnung nach einem der Ansprüche 2 bis 5, dadurch gekennzeichnet, daß der erste Widerstand (R6) und der zweite Widerstand (R5) veränderlich ausgebildet sind, insbesondere durch zuschaltbare Parallelwiderstände (R4, R3) (Fig. 1).

7. Schaltungsanordnung nach einem der Ansprüche 1 bis 6 für einen Verbraucher mit einem Akkumulator (2), vorzugsweise einem Nickel-Cadmium-Akkumulator, dadurch gekennzeichnet, daß der den Verbraucher speisenden Wicklung (n2) ein Gleichrichter (D2) nachgeschaltet ist, derart, daß durch die annähernd konstante Spannung (U2) des Akkumulators (2) die Ausschaltdauer ($t_s$) des ersten Halbleiterschalters (T1) bestimmt wird und ein vorgegebener mittlerer Ausgangsstrom (I2) in den Verbraucher fließt (Fig. 1, 4).

8. Schaltungsanordnung nach Anspruch 7, dadurch gekennzeichnet, daß ein mit dem Akkumulator (2) verbundener, spannungsabhängiger Schalter (T3, ZD, R7, R8, R9) den ersten Halbeterschalter (T1) bei Erreichen einer vorgegebenen Akkumulatorspannung ausschaltet (Fig. 4).

9. Schaltungsanordnung nach Anspruch 8, dadurch gekennzeichnet, daß der spannungsabhängige Schalter einen Transistor (T3) aufweist, dessen Basis-Emitter-Strecke in Reihe mit einer Zenerdiode (ZD) parallel zum Akkumulator (2) geschattet ist, und dessen Kollektor mit der Steuerelektrode des ersten Halbleiterschalters (T1) verbunden ist.

10. Schaltungsanordnung nach Anspruch 9, dadurch gekennzeichnet, daß die Zenerdiode (ZD) mit dem Akkumulator (2) thermisch gekoppelt ist.

11. Schaltungsanordnung nach Anspruch 6 und einem der Ansprüche 9 bis 10 für einen Verbraucher, der aus dem Akkumulator (2) und einem mit einem Einschalter (S1) versehenen Motor (1) besteht, dadurch gekennzeichnet, daß mit dem Einschalter (S1) ein weiterer Schalter (S2) gekoppelt ist, der bei eingeschaltetem Motor den ersten und zweiten Widerstand (R6, R4; R5, R3) so verändert, daß der Sperrwandler allein einen zum Betrieb des Motors (1) ausreichenden Strom liefert (Fig. 1).

12. Schaltungsanordnung nach einem der Ansprüche 1 bis 6, dadurch gekennzeichnet, daß der den Verbraucher speisenden Wicklung (n2; n3) über einen Gleichrichter (D2) ein Kondensator (C5) nachgeschaltet ist, dessen Ladespannung über eine auf die Steuerelektrode des ersten Halbleiterschalters (T1) wirkende Zenerdiode (ZD1) oder ein anderes, eine Schwellenspannung lieferndes Bauteil konstant gehalten ist (Fig. 6, 7).

13. Schaltungsanordnung nach Anspruch 12, dadurch gekennzeichnet, daß die Zenerdiode (ZD1') über einen Optokoppler (8) auf die Steuerelektrode des ersten Halbleiterschalters (T1) wirkt (Fig. 7).

14. Schaltungsanordnung nach Anspruch 12 oder 13, bei dem der Verbraucher einen Akkumulator und einen über einen Schalter parallel liegenden Motor aufweist, dadurch gekennzeichnet, daß die Ladespannung des Kondensators (C5) über einen Widerstand (R10) den Akkumulator (2) auflädt, daß mit dem Schalter (S1) des Motors (1) ein weiterer, parallel zum Widerstand (R10) liegender Schalter (S3) zur Umschaltung der Speiseschaltung vom Ladebetrieb auf den Motorbetrieb gekoppelt ist, und daß die Zenerspannung der Zenerdiode (ZD1, ZD1') größer als die Akkumulatorspannung (U2) ist (Fig. 6).

15. Schaltungsanordnung nach Anspruch 14, dadurch gekennzechnet, daß eine Leuchtdiode (D3) in Reihe zum Widerstand (R10) geschaltet ist.

16. Schaltungsanordnung nach einem der Ansprüche 1 bis 6, 12, 13, dadurch gekennzechnet, daß an das in der Leitfähigkeit von der Summe der Steuersignale beeinflußbare Halbleiterelement (T2) zusätzlich ein drittes Steuersignal angelegt ist, das dem Verbraucherstrom proportional und den ersten beiden Steuersignalen entgegengerichtet ist.

17. Schaltungsanordnung nach Anspruch 16, dadurch gekennzeichnet, daß der Verbraucher (1) einseitig mit dem in Reihe mit dem ersten Halbleiterschalter (T1) liegenden ersten Widerstand (R6) verbunden ist, derart, daß der Verbraucherstrom oder ein Äquivalent des Verbraucherstroms entgegengesetzt zum Primärstrom (I1) über den ersten Widerstand (R6) fließt, und daß die am ersten Widerstand (R6) abfallende Spannung als erstes, zweites und drittes Steuersignal an das Halbleitereiement (T2) angelegt ist.

18. Schaltungsanordung nach einem der Ansprüche 12 oder 13, dadurch gekennzeichnet, daß das die Schwellenspannung liefernde Bauteil eine veränderbare Schwellenspannung aufweist und daß ein aus dem Verbraucherstrom abgeleitetes Steuersignal an das Bauelement angelegt ist um die Schwellenspannung abhängig vom Verbraucherstrom zu regeln.

19. Schaltungsanordnung nach einem der Ansprüche 1 bis 6 dadurch gekennzeichnet, daß der Verbraucher eine Gasentladungslampe (G) ist (Fig. 8).

20. Schaltungsanordnung nach Anspruch 2 und einem der Ansprüche 3, 5 bis 19, dadurch gekennzeichnet, daß das von der Summe der Steuersignale beeinflußte Halbleiterelement eine Zenerdiode ist, die an die Steuerelektrode des ersten Halbleiterschalters (T1) angeschlossen ist und an der die an dem ersten Widerstand (R6) abfallende Spannung anliegt, derart, daß die Zenerdiode bei Erreichen eines vorgegebenen, über den ersten Widerstand (R6) fließenden Stromes leitet.

**Claims**

1. A circuit arrangement for the controlled supply of a load from input voltage sources of different voltages, using a self-oscillating blocking converter having a transformer (5) whose primary winding (n1) is connected to the input voltage source by way of a controllable first semiconductor switch (T1) and which supplies the load by way of one of its windings (n2), and with a semiconductor element (T2) whose conductivity can be influenced by the sum of two control signals, one of which is proportional to the primary current (11) flowing through the primary winding, so that the semiconductor element (T2) provides for switching off the first semiconductor switch and thus the switch-on time thereof, in dependence on a value of the primary current, which is variable in dependence on the second control signal which is proportional to the voltage (U1) of the input voltage source (3, 4), in such a way that, with increasing input voltage, switching off occurs at falling values of the primary current, characterised in that the control signal which is proportional to the voltage (U1) of the input voltage source is supplied during the conduction phase of the first semiconductor switch by the voltage at a secondary winding (n2) of the transformer (5), in such a way that the mean energy content of the transformer core is so set that the output current, with a predetermined output voltage, remains substantially constant, independently of the input voltage.

2. A circuit arrangement according to claim 1 characterised in that a first resistor (R6) is connected in series with the primary winding (n1) of the transformer (5), that a current (through R5) which is proportional to the voltage (U1) of the input voltage source (3, 4) is superimposed on the primary current (11) flowing through the first resistor (R6), and that the voltage dropped at the first resistor (R6) is applied as first and second control signals to the semiconductor element (T2).

3. A circuit arrangement according to claim 1 or claim 2 characterised in that the current component which is proportional to the voltage (U1) of the input voltage source (3, 4) is set by a second resistor (R5).

4. A circuit arrangement according to claim 3 characterised in that the first resistor is formed by two series-connected resistors (R61, R62), that the voltage dropped at the junction of the two resistors is applied by way of a third resistor (R63) to the control electrode of the semiconductor element which is formed as a second semiconductor switch (T2), and that the second resistor (R5) is connected between the secondary winding (n2) and the control electrode of the second semiconductor switch (T2) (Figure 8).

5. A circuit arrangement according to claim 3 or claim 4 characterised in that a display means, preferably a light emitting diode (D1), is connected in series with the second resistor (R5).

6. A circuit arrangement according to one of claim 2 to 5 characterised in that the first resistor (R6) and the second resistor (R5) are variable, in particular by means of parallel resistors (R4, R3) which can be connected into circuit (Figure 1).

7. A circuit arrangement according to one of claims 1 to 6, for a load having an acumulatator (2), preferably a nickel-cadmium accumulator, characterised in that a rectifier (D2) is connected on the output side of the winding (n2) supplying the load, in such a way that the switch-off period ($t_s$) of the first semiconductor switch (T1) is determined by the approximately constant voltage (U2) of the accumulator (2) and a predetermined mean output current (12) flows into the load (Figures 1 and 4).

8. A circuit arrangement according to claim 7 characterised in that a voltage-dependent switch (T3, ZD, R7, R8, R9) which is connected to the accumulator (2) switches off the first semiconductor switch (T1) when a predetermined accumulator voltage is reached (Figure 4).

9. A circuit arrangement according to claim 8 characterised in that the voltage-dependent switch has a transistor (T3), the base-emitter path of which is connected in series with a Zener diode (ZD), in parallel with the accumulator (2), and the collector of which is connected to the control electrode of the first semiconductor switch (T1).

10. A circuit arrangement according to claim 9 characterised in that the Zener diode (ZD) is thermally coupled to the accumulator (2).

11. A circuit arrangement according to claim 6 and one of claims 9 to 10, for a load comprising an accumulator (2) and a for (1) provided with an on switch (S1) characterised in that coupled to the on switch (S1) is a further switch (S2) which, when the motor is switched on, varies the first and second resistors (R6, R4; R5, R3) in such a way that the converter alone supplies a current sufficient for operation of the motor (1) (Figure 1).

12. A circuit arrangement according to one of claim 1 to 6 characterised in that a capacitor (C5) is connected on the output side of the winding (n2; n3) supplying the load, by way of a rectifier (D2), the charging voltage of said capacitor being maintained constant by way of a Zener diode (ZD1) which acts on the control electrode of the first semiconductor switch (T1), or another component which supplies a threshold voltage (Figures 6 and 7).

13. A circuit arrangement according to claim 12 characterised in that the Zener diode (ZD1') acts on the control electrode of the first semiconductor switch (T1) by way of an optical coupler (8) (Figure 7).

14. A circuit arrangement according to claim 12 or claim 13 wherein the load has an accumulator and a motor connected in parallel by way of a switch, characterised in that the charging voltage of the capacitor (C5) charges up the accumulator (2) by way of a resistor (R10), that a further switch (R3) which is in parallel with the resistor (R10) is coupled to the switch (S1) of the motor (1), for switching over the supply circuit from the charging mode to the motor operation mode, and that the Zener voltage of the Zener diode (ZD1, ZD1') is higher than the accumulator voltage (U2) (Figure 6).

15. A circuit arrangement according to claim 14 characterised in that a light emtting diode (D3) is connected in series with the resistor (R10).

16. A circuit arrangement according to one of claim 1 to 6, 12 and 13 characterised in that a third control signal is additionally applied to the semiconductor element (T2) which can be influenced in conductivity by the sum of the control signals, said third control signal being proportional to the load current and being opposite to the first two control signals.

17. A circuit arrangement according to claim 16 characterised in that the load (1) is connected on one side to the first resistor (R6) which is in series with the first semiconductor switch (T1), in such a way that the load current or an eguivalent of the load current flows in opposition to the primary current (11) through the first resistor (R6) and that the voltage which is dropped at the first resistor (R6) is applied to the semiconductor element (T2), as first, second and third control signals.

18. A circuit arrangement according to one of claim 12 and 13 characterised in that the component supplying the threshold voltage has a variable threshold voltage and that a control signal which is derived from the load current is applied to the component, to adjust the threshold voltage in dependence on the load current.

19. A circuit arrangement according to one of claim 1 to 6 characterised in that the load is a gas discharge lamp (G) (Figure 8).

20. A circuit arrangement according to claim 2 and one of claim 3 and 5 to 19 characterised in that the semiconductor element which is influenced by the sun of the control signals is a Zener diode which is connected to the control electrode of the first semiconductor switch (T1) and to which is applied the voltage dropped at the first resistor (R6), whereby the Zener diode conducts when a predetermined current flowing through the first resistor (R6) is reached.

## Revendications

1. Montage permettant l'alimentation réglée d'un appareil d'utilisation à partir de sources de tension d'entrée possédant des tensions différentes, moyennant l'utilisation d'un convertisseur à osciliateur bloqué comportant un transformateur (5), dont l'enroulement primaire (n1) est relié à une source de tension d'entrée par l'intermédiaire d'un premier commutateur à semi-conducteurs (T1) pouvant être commandé, et qui alimente l'appareil d'utilisation par l'intermédiaire de l'un de ses enroulements (n2), et comportant un élément semi-conducteur (T2), dont la conductibilité peut être influencée par la somme de deux signaux de commande, dont l'un est proportionnel au courant primaire (I1) circulant à travers l'enroulement primaire, de telle sorte que l'élément semi-conducteur (T2) effectue la coupure du premier commutateur à semi-conducteurs et de ce fait l'arrêt de la durée de conduction de ce dernier en fonction d'une valeur du courant primaire qui peut être modifiée en fonction du second signal de commande proportionnel à la tension (U1) de la source de tension d'entrée (3, 4), de telle manière que lorsque la tension d'entrée augmente, la coupure s'effectue pour des valeurs du courant primaire allant en diminuant, caractérisé en ce que le signal de commande proportionnel à la tension (U1) de la source de tension d'entrée est fourni pendant la phase de conduction du premier commutateur à semi-conducteurs à partir de la tension sur un enroulement secondaire (n2) du transformateur (5) de telle sorte que le contenu moyen d'énergie du noyau du transformateur se trouve réglé de manière que le courant de sortie reste sensiblement constant pour une tension de sortie prédéterminée indépendamment de la tension d'entrée.

2. Montage selon la revendication 1, caractérisé en ce qu'une première résistance (R6) est branchée en série avec l'enroulement primaire (n1) du transformateur (5), qu'un courant (passant par R5), proportionnel à la tension (U1) de la source de tension d'entrée (3, 4), est superposé au courant primaire (I1) circulent à travers la première résistance (R6) et que la tension développée aux bornes de la première résistance (R6) est appliquée en tant que premier et second signal de commande à l'élément semi-conducteur (T2).

3. Montage selon la revendication 1 ou 2, caractérisé en ce que la composante de courant proportionnelle à la tension (U1) de la source de tension (3, 4), est réglée par une seconde résistance (R5).

4. Montage selon la revendication 3, caractérisé en ce que la première résistance est formée par deux résistances (R61, R62) montées en série, que la tension au niveau du point de jonction des deux résistances est appliquée par l'intermédiaire d'une troisième résistance (R63) à l'électrode de commande de l'élément semi-conducteur (T2) formant le second commutateur à semi-conducteurs, et que la seconde résistance (R5) est branchée entre l'enroulement secondaire (n2) et l'électrode de commande du second commutateur à semi-conducteurs (T2) (figure 8).

5. Montage selon la revendication 3 ou 4, caractérisé en ce qu'un dispositif d'affichage, de préférence une diode à luminescence (D1), est branché en série avec la seconde résistance (R5).

6. Montage selon l'une quelconque des revendications 2 à 5, caractérisé en ce que le première résistance (R6) et la seconde résistance (R5) sont rendues variables, notamment au moyen de résistances parallèles (R4, R3) pouvant être branchées en supplément (figure 1).

7. Montage selon une des revendications 1 à 6 pour un appareil d'utilisation comportant un accumulateur (2), de préférence un accumulateur cadmium-nickel, caractérisé en ce que l'enroulement (n2) alimentant l'appareil d'utilsation est suivi d'un redresseur (D2) de sorte que la durée de coupure ($t_s$) du premier

commutateur à semi-conducteurs (R1) est déterminée par la tension approximativement constante (U2) de l'accumulateur, et qu'un courant moyen de sortie (I2) prédéterminé circule dans l'appareil d'utilisation (figures 1, 4).

8. Montage selon la revendication 7, caractérisé en ce qu'un commutateur (T3, ZD, R7, R8, R9) dépendant de la tension et relié à l'accumulateur (2) coupe le premier commutateur à semiconducteurs (T1) lorsqu'une tension prédéterminée de l'accumulateur est atteinte (figure 4).

9. Montage selon la revendication 8, caractérisé en ce que le commutateur dépendant de la tension comporte un commutateur (T3) dont l'espace base-émetteur, en série avec une diode Zener (ZD), est en parallèle avec l'accumulateur (2) et dont le collecteur est relié à l'électrode de commande du premier commutateur à semi-conducteurs (T1).

10. Montage selon la revendication 9, caractérisé en ce que la diode Zener (ZD) est accouplée thermiquement à l'accumulateur (2).

11. Montage selon la revendication 6 et l'une des revendications 9 à 10 pour un appareil d'utilisation qui est constitué par un accumulateur (2) et par un moteur (1) muni d'un commutateur (S1), caractérisé en ce qu'au commutateur (S1) est accouplé un second commutateur (S2) qui, lorsque le moteur est branché, modifie la première et la seconde résistances (R6, R4; R5, R3) de telle sorte que le convertisseur à oscillateur bloqué délivre un courant seulement suffisant pour le fonctionnement du moteur (1) (figure 1).

12. Montage selon l'une des revendications 1 à 6, caractérisé en ce que l'enroulement (n2, n3) alimentant l'appareil d'utilisation est coupé, à travers un redresseur (D2), à un condensateur (C5) dont la tension de charge est maintenue constante par une diode Zener (2D1) ou un autre composant délivrant une tension de seuil, agissant sur l'électrode de commande du premier commutateur à semi-conducteur (T1) (figures 6, 7).

13. Montage selon la revendication 12, caractérisé en ce que la diode Zener (ZD1') agit par l'intermédiaire d'un opto-coupleur (8) sur l'électrode de commande du premier commutateur à semi-conducteurs (T1) (figure 7).

14. Montage selon la revendication 12 ou 13, dans lequel l'appareil d'utilisation comporte un accumulateur et un moteur monté en parallèle par l'intermédiaire d'un commutateur, caractérisé en ce que la tension de charge du condensateur (C5) charge l'accumulateur (2) par l'intermédiaire d'une résistance (R10), qu'au commutateur (S1) du moteur (1) est accouplé un autre commutateur (S3) placé en parallèle avec la résistance (R10) pour commuter le circuit d'alimentation de la fonction de charge à la fonction moteur, et que la tension de Zener de le diode Zener (ZD1, ZD1') est supérieure à la tension (U2) de l'accumulateur (figure 6).

15. Montage selon la revendication 14, caractértsé en ce qu'une diode luminescente (D3) est branchée en série avec la résistance (R10).

16. Montage selon une des revendications 1 à 6, 12, 13 caractérisé en ce qu'à l'élément semi-conducteur (T2), dont la conductibilité peut être influencée par la somme des signaux de commande, est appliqué en outre un troisième signal de commande qui est proportionnel au courant de l'appareil d'utilisation et dirigé en sens opposé des deux premiers signaux de commande.

17. Montage selon la revendication 16, caractérisé en ce que l'appareil d'utilisation (1) est relié, d'un côté, à la première résistance (R6) branchée en série avec le premier commutateur à semi-conducteurs (T1), de telle sorte que le courant de l'appareil d'utilisation ou un équivalent du courant de l'appareil d'utilisation s'écoule en sens opposé du courant primaire (I1), dans la première résistance (R6) et que la tension développée aux bornes de la première résistance (R6) est appliquée en tant que premier, second et troisième signal de commande à l'élément semi-conducteur (T2).

18. Montage selon l'une des revendications 12 ou 13, caractérisé en ce que le composant délivrant la tension de seuil possède une tension de seuil ajustable et qu'un signal de commande dérivé du courant de l'appareil d'utilisation est appliqué au composant afin de régler la tension de seuil en fonction du courant de l'appareil d'utilisation.

19. Montage selon l'une des revendications 1 à 6, caractérisé en ce que l'appareil d'utilisation est une lampe à décharge dans un gaz (G) (figure 8).

20. Montage selon la revendication 2 et l'une des revendications 3, 5 à 19, caractérisé en ce que l'élément semi-conducteur influencé par la somme des signaux de commande est une diode Zener, qui est raccordée à l'électrode de commande du premier commutateur à semiconducteurs (T1) et à laquelle est appliquée la tension développée aux bornes de la première résistance (R6), de telle sorte que la diode Zener est conductrice lorsqu'un courant prédéterminé circulant dans la première résistance (R6) est atteint.

FIG. 1

G1 U1 C1 D5 R15 n1 5 n2 A D2 d J2 U2 2 M 1

R2 D1 R5 R3 S1

J1 R1 C2

T1

C3 R6 T2 S2 R4

FIG. 3

J(mA)

700
600
500
400
300
200
100

Netzbetrieb mit Motor,
S1 und S2 geschlossen

Dauerladebetrieb, S1 und S2 offen

20  40  60  80  100  120  140  160  180  200  220  240  260   U1(V)

# FIG. 2

FIG. 4

FIG. 5

# FIG.6

# FIG.7

FIG.8